Europäisches Patentamt

European Patent Office

Office européen des brevets

(11) Publication number: **0 246 821**
**A2**

# EUROPEAN PATENT APPLICATION

(21) Application number: 87304327.7

(51) Int. Cl.4: **F16K 27/04**

(22) Date of filing: **15.05.87**

(30) Priority: **21.05.86 GB 8612326**
**09.07.86 GB 8616678**

(43) Date of publication of application:
**25.11.87 Bulletin 87/48**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Reynolds, Desmond Henry James**
**156, Tamworth Road**
**Sutton Coldfield West Midlands(GB)**

(74) Representative: **Waite, Anthony William et al**
**MARKS & CLERK Alpha Tower Suffolk Street**
**Queensway**
**Birmingham B1 1TT(GB)**

(54) **Pressure-receiving assembly.**

(57) A pressure-receiving assembly has a body (l) of plastics material containing a pressure chamber (l7) and a piston (4), also of plastics material. The body (l) is at least partially enclosed within a closely fitting metal sheath (l8) which is rendered immobile relative to the body by inwardly pressed tongues (l9) acting against an end of the body.

EP 0 246 821 A2

## PRESSURE-RECEIVING ASSEMBLY.

This invention relates to an assembly containing a chamber for the reception of fluid under pressure, the invention being particularly concerned with a valve assembly in which a piston is slidable within a pressure chamber defined by a surrounding body. One example of such a valve assembly is an air regulating valve useful, for example, in regulating the air supply to a compressed air servo-booster for incorporation into a vehicle braking system.

The introduction of compressed air into pressure-receiving assemblies such as pressure regulating valves imposes high loads on the various component parts thereof and it is therefore usual to manufacture these parts from metallic materials. However, the moisture content of compressed air gives rise to a corrosive atmosphere unfavourable to ferrous metal and the components of assemblies such as air valves are normally made from expensive corrosion resistant materials such as aluminium or, when of ferrous materials, are coated with such materials as chrome or zinc, for example. Components of plastics materials have been used in some types of pressure-receiving assemblies, such as valves, but their use is restricted to low pressure devices since they are not capable of reliably withstanding the passage of high pressure air.

An object of the invention is to provide a pressure-receiving assembly, such as a valve or pressure cylinder, incorporating plastics components but which may nevertheless be used in a high pressure environment such as, in the case of a valve, in the compressed air supply to a compressed air servo-booster, or in the case of a pressure cylinder, in a vehicle hydraulic brake or clutch actuating system.

According to the invention, a pressure-receiving assembly comprises a body containing a pressure-receiving chamber, the body being of plastics material and closely surrounded over at least part of its length by a separate reinforcing member which reacts outward forces applied to the body under the effect of internal pressure applied to said chamber.

Preferably, the reinforcing member is provided with formations engaging the body to immobilise the sheath at least axially, and conveniently also rotationally, relative to the body.

Conveniently, the member may be a close fitting sleeve which may have a continuous peripheral surface or may be formed with openings or perforations to form a grid or cage. With an arrangement of the latter type, the openings are small enough to ensure that the unsupported parts of the body are not subject to significant expansion as a result of the internal pressure forces on the body.

The member may be of a composite nature, having, for example, an inner core, which may be of metal, plastics or other suitable material, upon which is wound an additional elongate reinforcing element in the form of a band, fibre or metal wire, for example. The band or fibre may conveniently be of curable resin which hardens after winding. When in the form of a wire, the additional reinforcement may conveniently be wound on to the core as a spiral formation in one or more layers. When the core is of plastics material it may conveniently be formed by moulding and the additional reinforcement may then be incorporated during the moulding process.

Alternatively, the reinforcing member may itself be in the form of a band or fibre, as of plastics material for example, or a metallic wire, any of which may be wound directly on to the body of the pressure-receiving assembly.

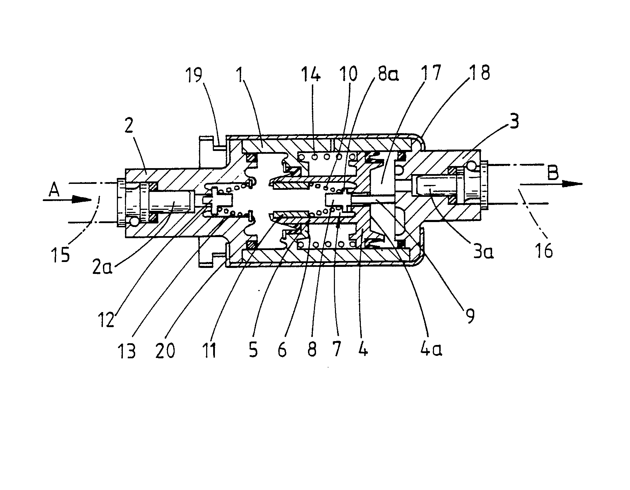

The invention will now be described, by way of example, with reference to the accompanying drawing which is a longitudinal cross-section of one enbodiment of the invention in the form of an air pressure regulating valve.

Referring to the drawing, the valve illustrated therein includes a hollow cylindrical valve body 1 the opposed open ends of which are closed by respective end members 2, 3, each of which is adapted to receive a respective connector 2a, 3a, by means of which air lines can be connected to the valve. A main piston 4 is slidably mounted within the body 1 and has an axially extending hollow portion 5 which slides within an opening defined by an internal shaped rib 6 of the body. The piston 4 has a central bore coaxial with the hollow portion 5 and in which is slidably mounted a valve member 7 having a head 8 and a projecting stem 9. The valve member is urged by a spring 10 to the right as seen in the drawing, the spring acting between a flange 8a of the valve member 7 and an abutment 11 carried by the hollow part 5 of the piston 4, the abutment conveniently being formed by a collar hot rivetted to said piston part. A non-return valve 12 associated with the end member 2 is urged towards its closed position by a spring 13. The piston 4 is itself urged to the right by a further spring 14 acting between the piston and the rib 6 of the body, such rightward movement of the piston being restricted by engagement of the valve stem 9 against an opposed surface of the end member 3.

The regulating valve would normally be connected, in use, between a supply of compressed air connected to the end member 2 via a pipe l5 secured to the connector 2a and a servo-booster connected to the connector 3a via a pipe l6. The directions of air flow into and out of the valve are indicated respectively by arrows A, B. The initial position of the piston 4 is set by abutment of the valve stem 9 against the end member 3 and the balance of the springs l4 and l0 acting respectively on the piston 4 and valve member 7, the piston being initially far enough to the left to maintain the valve member 7 in an open condition. As compressed air is supplied through the valve and builds up in the booster, the pressure in chamber l7 to the right of the piston 4 increases until the force of this pressure acting on the diameter of piston face 4A is sufficient to overcome the combined force of the spring l4 plus the force of the supply pressure acting over the area of the lefthand end of the valve member 7. The effect of this is to move the valve stem 9 out of engagement with the end member 3, thereby allowing the valve member 7 to close and interrupt the air supply to the booster. When, during use of the booster, the pressure therein falls, the pressure in chamber l7 falls correspondingly, eventually allowing the piston 4 to move once again to the right to permit the valve member 7 to reopen and re-connect the booster to the supply pressure.

The body l and piston 4 are formed by moulding from plastics material and would not normally reliably withstand the operative pressures encountered by the regulating valve when in use with a brake servo-unit. In the valve of the invention, the plastics components are enclosed within a thin-walled metallic sleeve or sheath l8, the righthand end of which is wrapped around a radially extending part of the end member 3 and the lefthand end of which is provided with inwardly pressed tongues or the like l9 which bear against a metallic washer 20 and act to lock the sheath axially relative to the plastics components and to retain the end member 2 and 3 firmly in position on the body l. They preferably also provide sufficient axial compression to lock the sheath l8 and sleeve l against relative rotation.

It will be understood that the assembly of the invention may take a variety of different forms other than the one illustrated by way of example. For example, the particular form of the piston 4 may be varied as desired and any convenient number of such pistons and/or valve members may be provided, according to requirements. The sheath l0 may be locked in position by means other than those described and may be positively locked to the body l and/or end members 2, 3 against rotation. This may be achieved, for example by providing interengaging formations respectively on the sheath and various plastic members. The assembly may be of any convenient type suitable for the incorporation of plastics components in a manner enabling them to be enclosed in a reinforcing sheath in accordance with the invention. A further example of a pressure-receiving assembly of the invention is a pressure cylinder, such as a master cylinder for use in a vehicle clutch or brake actuating system and having at least the pressure cylinder thereof formed from plastics material.

It will be seen that the invention enables the lightness, low cost and non-corrosive advantages of plastics components to be enjoyed, even in high pressure assemblies, the external sheath representing a minimum use of metal or other reinforcing material away from the corrosive environment within the assembly.

## Claims

l. A pressure-receiving assembly characterised in that it comprises a body (l) containing a pressure-receiving chamber, the body being of plastics material and closely surrounded over at least part of its length by a separate reinforcing member (l8) which reacts outward forces applied to the body under the effect of internal pressure applied to said chamber.

2. An assembly according to Claim l characterised in that the reinforcing member (l8) is a closely fitting sleeve.

3. An assembly according to Claim l or Claim 2 characterised in that the reinforcing member (l8) is provided with formations (l9) acting to immobilise the member at least axially relative to the body.

4. An assembly according to Claim 3 characterised in that the reinforcing member is provided with formations engaging the body to immobilise the sheath rotationally relative to the body.

5. An assembly according to any one of the preceding claims characterised in that the reinforcing member is a sleeve (l8) having a continuous peripheral surface.

6. An assembly according to any one of Claims l to 4 characterised in that the reinforcing member is in the form of a grid or cage having openings in its peripheral surface.

7. An assembly according to any one of the preceding claims characterised in that the reinforcing member is of a composite nature incorporating an inner core upon which is wound an additional elongate reinforcing element.

8. An assembly according to Claim l characterised in that the separate reinforcing member is of elongate form wound directly onto the body.

9. A pressure-receiving assembly according to any one of the preceding claims in the form of an air regulating valve having a body (l) and an internal piston (4) of plastics material.

10. A pressure-receiving assembly according to any one of Claims 2 to 9 in the form of an air regulating valve having a body (l) and an internal piston (4) of plastics material, characterised in that the sleeve provides generally radially extending portions (l9) acting to lock the sleeve axially relative to the body.

ll. A pressure-receiving assembly according to Claim 9 or Claim l0 characterised in that the body comprises a hollow cylindrical part (l) and a pair of end members (2, 3) at the respective ends thereof, the generally radially extending sleeve portions engaging over parts of said end members to retain them in position on the body.

l2. A pressure-receiving assembly according to any one of Claims 2 to ll characterised in that at least some of said formations are radially directed tongues (l9) pressed out of the sleeve and each engaging an axially facing surface of the assembly.

l3. A pressure-receiving assembly according to any one of Claims l to 8 in the form of a master cylinder for use in a vehicle hydraulic actuating system.